# EUROPEAN PATENT SPECIFICATION

(11) **EP 2 712 826 B1**
(45) Date of publication and mention of the grant of the patent: **10.02.2016**
(21) Application number: 13186262.5
(22) Date of filing: 26.09.2013
(51) Int. Cl.: B65G 15/28, B65G 15/00, A01K 1/01, A01K 45/00, A01K 31/04

(54) **Conveyor belt device with an unsupported belt**
Bandförderer mit einem nicht abgestützten Band
Convoyeur à bande muni d'une bande non supportée

(30) Priority: 26.09.2012 NL 2009522
(43) Date of publication of application: 02.04.2014
(73) Proprietor: Van de Ven Beheer B.V., 5521 DZ Eersel (NL)
(72) Inventor: van de Ven, Cornelis Antonius Wilhelmus, 5521 NB Eersel (NL)
(74) Representative: Verhees, Godefridus Josephus Maria

(56) References cited:
- DE-U1-202008 005 116
- US-A- 4 227 660
- US-A- 4 848 539

## Description

### Field of the invention

The invention relates to a conveyor belt apparatus comprising a drive unit with a drive roller as well as a reversing unit which includes a reversing roller and an endless conveyor belt which during operation is wound around the drive roller and the reversing roller and in operative position comprises an upstream section and a downstream section, where the upstream section during operation moves towards the reversing roller and the downstream section moves towards the drive roller, wherein in operative position the reversing unit is located distal from the drive unit and the endless conveyor belt is wound around the drive roller and reversing roller and with the downstream section extending between the rollers rests upon a base and with the upstream section rest upon the downstream section.

### State of the art

A conveyor belt apparatus of this type, as stated in the preamble of claim 1, is known from US-A-4 848 539. The known conveyor belt apparatus can be easily installed in and removed from a cattle house or barn. When the known conveyor belt apparatus is installed in the cattle house or barn it is only necessary for the drive unit and the reversing unit to be installed subsequent to which the conveyor belt can be rolled out on the floor and wound around the drive roller and reversing roller.

### Summary of the invention

It is an object of the invention to provide a conveyor belt apparatus of the type defined in the opening paragraph in which the conveyor belt can be better guided than in the known apparatus. For this purpose the conveyor belt apparatus according to the invention is as stated in the appended claim 1. The connecting piece is preferably formed by a strip which is placed underneath the conveyor belt. The side guides are then situated on either one of the two sides of the conveyor belt and guide the edges of the conveyor belt. An additional advantage of the conveyor belt apparatus according to the invention is the fact that when utilized in a poultry barn the ckicks can easily run on and off the conveyor belt because the conveyor belt is situated on the floor.

Furthermore the drive unit preferably comprises a pressure roller which during operation presses the conveyor belt against the drive roller. The drive unit further preferably includes a tensioning roller which during operation is pressed against the conveyor belt under spring force.

The conveyor belt apparatus further preferably has a mobile reel on which the conveyor belt can be wound and from which the conveyor belt can be unwound.

### Brief description of the drawings

The invention will now be described in more detail based on an example of embodiment of the conveyor belt apparatus according to the invention while reference is made to the appended drawing figures, in which:
Fig. 1 shows the conveyor belt apparatus prior to its installation in a barn; and
Fig. 2 shows the conveyor belt apparatus subsequent to its installation in the barn.

### Detailed description of the drawings

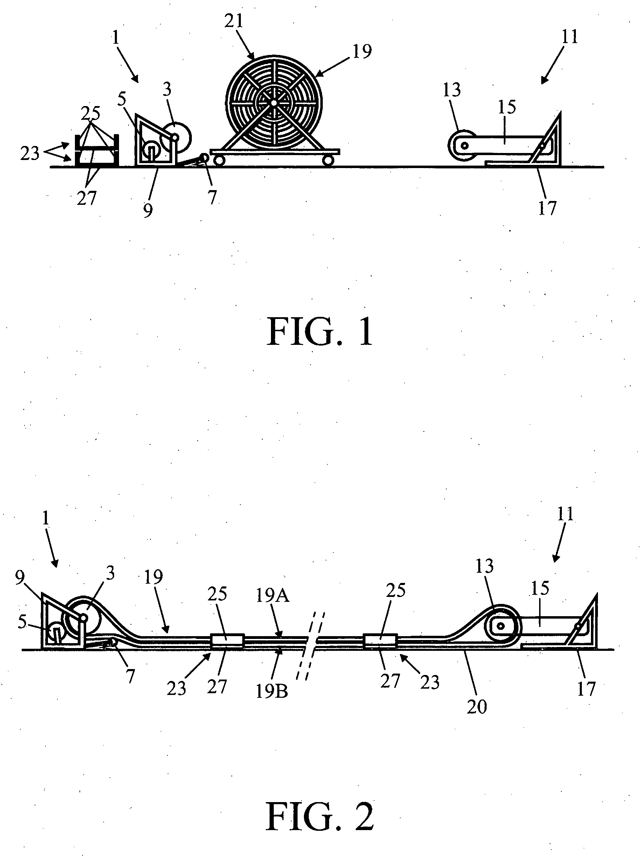

Figs. 1 and 2 show an embodiment of the conveyor belt apparatus according to the invention prior to and subsequent to respectively its installation in a barn. The conveyor belt apparatus comprises a drive unit 1with a drive roller 3, a pressure roller 5 and a tension roller 7 which are bearing-mounted in a frame 9, and a reversing unit 11 with a reversing roller 13 which is connected to a frame 17 by means of a swivel arm 15. The conveyor belt apparatus further includes an endless conveyor belt 19 which is wound on a mobile reel 21 (see Fig. 1), and can be wound around the drive roller and the reversing roller. In operative position (see Fig. 2) the reversing unit 11 is located distal from the drive unit 1 and the endless conveyor belt 19 is wound around the drive roller 3 and reversing roller 13. The downstream section 19B of the conveyor belt then rests upon a base 20 and the upstream section 19A rests upon the downstream section 19B. The conveyor belt apparatus further includes a plurality of guide elements 23 which each comprise two side guides 25 which are connected to each other by means of a connecting piece 27.

With this conveyor belt apparatus small chicks can be moved from a poultry breeding barm to a poultry feeding barn. Since the conveyor belt is rolled out on the floor, the small chicks can easily step off the conveyor belt without them having to overcome a (drop) height. The conveyor belt apparatus can also be used for discharging poultry droppings. In that case the conveyor belt is temporarily installed underneath a grid floor.

The conveyor belt 19 is preferably made of polypropylene. The width of the system and its length are freely selectable while there should be allowed for the friction resistance which the downstream section 19B of the conveyor belt experiences on the base 20 and when the upper, upstream section 19A slides over the bottom, downstream section of the conveyor belt. In running direction the conveyor belt 19 is guided by means of the guide elements 23.

The drive unit 1 is placed on the concrete floor in the barn by means of centring pins (not shown in the drawing figures). As a result, the drive unit is always centred and perpendicular. The same goes for the reversing unit 11, but because this unit is smaller, it can be attached to the firm world (a wall or the floor) and be removed or folded away, if needed.

If the conveyor belt 19 is to be removed from the barn, the reversing roller 13 of the reversing unit 11 is removed from the frame 17, so that the endless conveyor belt 19 is detached from this reversing unit and rolled up by means of a reel 21 (double) up to the drive unit 1. The reel can simply be driven onto the drive unit and the whole construction can be removed from the barn by means of a lift truck.

Albeit the invention has been described in the foregoing with reference to the drawing figures, it should be pointed out that the invention is not by any manner or means restricted to the embodiments shown in the drawings. The invention also extends over any embodiment deviating from the embodiments shown in the drawing figures within the scope defined by the claims.

## Claims

1. Conveyor belt apparatus comprising a drive unit (1) with a drive roller (3) as well as a reversing unit (11) which includes a reversing roller (13) and an endless conveyor belt (19), which during operation is wound around the drive roller and the reversing roller and in operative position comprises an upstream section (19A) and a downstream section (19B), where the upstream section during operation moves towards the reversing roller (13) and the downstream section moves towards the drive roller (3), wherein in operative position the reversing unit (11) is located distal from the drive unit (1) and the endless conveyor belt (19) is wound around the drive roller (13) and reversing roller (13) and with the downstream section (19B) extending between the rollers rests upon a base (20) and with the upstream section (19A) rests upon the downstream section (19B), **characterized in that** the conveyor belt apparatus further includes a plurality of guide elements (23) which are each provided with two side guides (25) which are connected to each other by means of a connecting piece (27), which side guides in operative position are situated on either one of the two sides of the conveyor belt and guide the edges of the conveyor belt.

2. Conveyor belt apparatus as claimed in claim 1, **characterized in that** the drive unit (1) further includes a pressure roller (5) which during operation presses the conveyor belt (19) against the drive roller (3).

3. Conveyor belt apparatus as claimed in claim 1 or 2, **characterized in that** the drive unit (1) further includes a tensioning roller (7) which during operation is pressed against the conveyor belt (19) under spring force.

4. Conveyor belt apparatus as claimed in claim 1, 2 or 3, **characterized in that** the conveyor belt apparatus further includes a mobile reel (21) on which the conveyor belt can be wound and from which the conveyor belt can be unwound.

## Patentansprüche

1. Förderbandvorrichtung, die eine Antriebseinheit (1) mit Antriebstrommel (3) sowie eine Umlenkvorrichtung (11) mit Umlenktrommel (13) und einen Endlosfördergurt (19) umfasst, der während des Betriebs um die Antriebstrommel und die Umlenktrommel geschlungen ist und in der Betriebsstellung einen vorlaufenden Abschnitt (19A) und einen rücklaufenden Abschnitt (19B) umfasst, wobei der vorlaufende Abschnitt während des Betriebs in die Richtung der Umlenktrommel (13) und der rücklaufende Abschnitt in die Richtung der Antriebstrommel (3) bewegt wird, wobei die Umlenkvorrichtung (11) in der Betriebsstellung im Abstand zur Antriebseinheit (1) angeordnet ist und der Endlosfördergurt (19) um die Antriebstrommel (3) und die Umlenktrommel (13) geschlungen ist und mit dem sich zwischen den Trommeln erstreckenden rücklaufenden Abschnitt (19B) auf einem Untergrund (20) ruht und mit dem vorlaufenden Abschnitt (19A) auf dem unteren Abschnitt (19B) ruht, **dadurch gekennzeichnet, dass** die Förderbandvorrichtung ferner mehrere Führungselemente (23) umfasst, die jeweils mit zwei Seitenführungen (25) versehen sind, die über ein Zwischenstück (27) miteinander verbunden sind, wobei die Seitenführungen in der Betriebsstellung auf jeder der beiden Seiten des Fördergurts angeordnet sind und diesen an seinen Rändern führen.

2. Förderbandvorrichtung nach Anspruch 1, **dadurch gekennzeichnet, dass** die Antriebseinheit (1) ferner eine Presswalze (5) umfasst, mit der der Fördergurt (19) während des Betriebs an die Antriebstrommel (3) gedrückt wird.

3. Förderbandvorrichtung nach einem der Ansprüche 1 oder 2, **dadurch gekennzeichnet, dass** die Antriebseinheit (1) ferner eine Spanntrommel (7) umfasst, die während des Betriebs durch Federspannung an den Fördergurt (19) gedrückt wird.

4. Förderbandvorrichtung nach einem der Ansprüche 1, 2 oder 3, **dadurch gekennzeichnet, dass** die Förderbandvorrichtung ferner eine fahrbare Haspel (21) umfasst, mit der der Fördergurt (19) auf- und abgerollt werden kann.

## Revendications

1. Dispositif convoyeur comprenant une unité d'entraînement (1) ayant un galet d'entraînement (3) ainsi qu'une unité de renvoi (11) ayant un galet de renvoi (13), et un convoyeur sans fin (19) qui pendant le fonctionnement est enroulé autour du galet d'entraînement et du galet de renvoi et en position de fonctionnement comprend un segment aller (19A) et un segment retour (19B), où, pendant le fonctionnement, le segment aller se déplace vers le galet de renvoi (13) et le segment retour se déplace vers le galet d'entraînement (3), où en position de fonctionnement l'unité de renvoi (11) se trouve à distance de l'unité d'entraînement (1) et le convoyeur sans fin (19) est enroulé autour du galet d'entraînement (3) et du galet de renvoi (13) et repose, en son segment retour (19B) s'étendant entre les galets, sur une assise (20) et repose, en son segment aller (19A), sur le segment inférieur (19B), **caractérisé en ce que** le dispositif convoyeur comprend en outre un certain nombre d'éléments de guidage (23), qui chacun est pourvu de deux glissières latérales (25) reliées l'une à l'autre via un raccord (27), lesquelles glissières latérales, en position de fonctionnement, se trouvent sur chacun des deux côtés du convoyeur et guident les bords du convoyeur.

2. Dispositif convoyeur selon la revendication 1, **caractérisé en ce que** l'unité d'entraînement (1) comprend en outre un galet de pression (5) qui, pendant le fonctionnement, comprime le convoyeur (19) contre le galet d'entraînement (3).

3. Dispositif convoyeur selon la revendication 1 ou 2, **caractérisé en ce que** l'unité d'entraînement (1) comprend en outre un galet de tension (7) qui, pendant le fonctionnement, est comprimé contre le convoyeur (19) par la force de rappel d'un ressort.

4. Dispositif convoyeur selon la revendication 1, 2 ou 3, **caractérisé en ce que** le dispositif convoyeur comprend en outre un dévidoir mobile (21) sur lequel le convoyeur (19) peut s'enrouler et se dérouler.
